# FASCICULE DE BREVET EUROPEEN

(11) **EP 3 727 932 B1**
(45) Date de publication et mention de la délivrance du brevet: **15.12.2021**
(21) Numéro de dépôt: 18766320.8
(22) Date de dépôt: 20.08.2018
(51) Int. Cl.: B60Q 1/04, B60R 21/34, B60R 19/24

(54) **PIECE DE FIXATION POUR UN PROJECTEUR DE VEHICULE AUTOMOBILE**
BEFESTIGUNGSTEIL FÜR KRAFTFAHRZEUGSCHEINWERFER
ATTACHMENT PART FOR A MOTOR VEHICLE HEADLAMP

(30) Priorité: 25.09.2017 FR 1758818
(43) Date de publication de la demande: 28.10.2020
(73) Titulaire: PSA Automobiles SA, 78300 Poissy (FR)
(72) Inventeur: LE BRIQUER, Yoann, 78910 ORGERUS (FR)
(86) Numéro de dépôt international: PCT/FR2018/052078
(87) Numéro de publication internationale: WO 2019/058039

(56) Documents cités:
- EP-A1- 2 236 355
- EP-A2- 1 155 907
- FR-A1- 2 801 027
- FR-A1- 2 802 496
- JP-A- H09 315 341
- US-B1- 6 196 624

## Description

L'invention a trait au domaine des véhicules automobiles, plus particulièrement à la fixation des projecteurs de véhicules automobiles.

La partie avant d'un véhicule automobile comprend notamment un pare-chocs avant et des projecteurs aptes à éclairer la route pour le conducteur. Le pare-chocs est constitué par une traverse de pare-chocs ayant vocation à protéger le véhicule en cas de choc frontal, et un bouclier positionné à l'avant de la traverse et servant principalement à améliorer l'esthétique et l'aérodynamique du véhicule. Les projecteurs sont en continuité avec le bouclier, et positionnés au-dessus et latéralement à la traverse de pare-chocs. Chaque projecteur est généralement fixé en trois points à la structure avant du véhicule, à savoir à un point supérieur extérieur, sur la joue d'aile avant ; à un point supérieur intérieur, sur le haut de la façade avant ; et à un point inférieur intérieur, habituellement via une patte de fixation s'étendant verticalement entre le point de fixation en question sur le projecteur et la traverse de pare-chocs avant.

Le document de brevet publié EP 2 236 355 B1 divulgue une patte de fixation pour le point de fixation inférieur intérieur d'un projecteur de véhicule automobile. Cette patte de fixation comporte une prolonge à son extrémité supérieure, la prolonge étant apte à prendre appui sur la façade avant, au-dessus de l'échangeur thermique en cas de choc à l'avant. Aussi, cette patte se divise en deux parties : une partie inférieure fixée sur la traverse de pare-chocs et une partie supérieure formant une équerre. À la jonction entre ces deux parties se trouve une zone de fragilité qui favorise la mise en appui de la prolonge sur la façade avant et permet ainsi de limiter l'intrusion de la prolonge dans l'échangeur thermique lors d'un choc. Ce type de patte de fixation présente l'inconvénient d'avoir une rigidité en flexion limitée, en particulier lorsque la distance entre le projecteur et la traverse avant de pare-chocs est importante, comme notamment sur les véhicules du type SUV (acronyme de « Sport Utility Vehicle »).

Le document de brevet publié FR 2 981 318 B1 divulgue un support fusible pour un projecteur de véhicule automobile, le support comprenant une extrémité fixée sur le châssis et une extrémité fixée sur le projecteur du véhicule. Le support vient en complément de trois autres pattes de fixation aptes à se rompre en cas de choc à l'avant du véhicule. Ce support comprend, en outre, une patte de fixation comportant trois portions : un plat supérieur, un plat médian incliné et un plat inférieur fixé à une base de fixation. Entre chaque plat se trouve un pli conformé pour résister à un effort donné. Mais ce support est conçu pour reprendre des efforts essentiellement verticaux en étant disposé à un bord avant du projecteur où le porte-à-faux est maximum. Il présente par conséquent une raideur en flexion très limitée.

L'invention a pour objectif de pallier au moins un des inconvénients de l'état de la technique susmentionné. Plus particulièrement, l'invention a pour objectif d'assurer une fixation inférieure satisfaisante d'un projecteur, qui réponde aux exigences de chocs piéton et de réparabilité, et ce en particulier pour les véhicules présentant une face avant haute où les projecteurs sont à une distance plus importante de la traverse de pare-chocs.

L'invention a pour objet un véhicule automobile comprenant : une traverse de pare-chocs avant ; un bouclier de pare-chocs avant, disposé devant la traverse ; deux projecteurs disposés latéralement de part et d'autre du véhicule et verticalement à distance et au-dessus de la traverse ; au moins une pièce de fixation d'un des projecteurs, reliant ledit projecteur à la traverse ; remarquable en ce que le bouclier comprend, sur une face interne, au moins une zone d'appui dudit bouclier, et la ou chacune des pièces de fixation comprend une zone de maintien coopérant avec ladite ou au moins une desdites zones d'appui.

Avantageusement, la ou chacune des pièces de fixation est fixée à une portion inférieure et latéralement intérieure du projecteur correspondant.

Selon un mode avantageux de l'invention, la zone de maintien de la ou de chacune des pièces de fixation est une zone de soutien du bouclier, supportant la ou les zones d'appui coopérant avec ladite zone de maintien.

Selon un mode avantageux de l'invention, la zone de maintien de la ou de chacune des pièces de fixation forme une surface de soutien horizontale recevant la ou les zones d'appui correspondantes du bouclier.

Selon un mode avantageux de l'invention, la ou chacune des pièces de fixation s'étend verticalement avec une extrémité inférieure fixée à la traverse et une extrémité supérieure fixée au projecteur correspondant, la zone de maintien de ladite pièce étant une zone intermédiaire entre lesdites extrémités.

Avantageusement, le projecteur comprend un boîtier et une portion en saillie dudit boîtier, fixée à l'extrémité supérieure de la pièce de fixation.

Selon un mode avantageux de l'invention, la ou chacune des pièces de fixation présente au niveau de l'extrémité inférieure de ladite pièce une zone configurée pour céder en cas de choc à l'avant du véhicule.

Selon un mode avantageux de l'invention, la ou de chacune des pièces de fixation comprend un corps creux s'étendant verticalement et, à une extrémité inférieure, une patte verticale de fixation à la traverse.

Selon un mode avantageux de l'invention, pour la ou chacune des pièces de fixation, le corps creux est une structure avec des parois extérieures et des parois internes de rigidification, ladite structure comprenant une face avant et une face arrière, au moins une desdites faces étant ouverte.

Selon un mode avantageux de l'invention, pour la ou chacune des pièces de fixation, le corps creux présente une portion inférieure et une portion supérieure plus étroite que la portion inférieure formant ainsi une variation de largeur, la zone de maintien sur ladite pièce étant formée par la portion inférieure au niveau de la variation de largeur.

Selon un mode avantageux de l'invention, pour la ou chacune des pièces de fixation, la zone configurée pour céder est située à une liaison entre la patte verticale de fixation et le corps creux de ladite pièce.

Selon un mode avantageux de l'invention, le bouclier comprend une coque avec une ouverture centrale et une grille d'entrée d'air disposée dans ladite ouverture, la ou les zones d'appui du bouclier étant formées ou fixées sur ladite grille.

Avantageusement, la zone d'appui du bouclier est une pièce rapportée sur la coque et/ou la grille d'entrée d'air.

Avantageusement, la pièce est réalisée dans un matériau plastique, plus préférentiellement dans un matériau thermoplastique.

Les mesures de l'invention sont intéressantes en ce qu'elles permettent d'assurer une fixation du projecteur tout en étant compatible avec les exigences de chocs piéton et de réparabilité. Le maintien de la pièce de fixation par le bouclier permet à ladite pièce de présenter une certaine fragilité utile pour permettre un effacement du projecteur lors d'un choc piéton tout en assurant une stabilité de fixation du projecteur, et ce sans pour autant prendre appui sur le radiateur. La coopération entre la zone de maintien et la zone d'appui correspondante du bouclier est telle qu'elle peut s'effacer en cas de déplacement vers l'arrière du projecteur lors d'un choc dudit projecteur avec le fémur d'un piéton. Cette coopération est avantageusement un simple engagement, suivant une direction longitudinale, entre les zones de maintien et d'appui, notamment lors du montage du bouclier. L'utilisation de matériau plastique permet de réaliser la pièce de fixation à un coût réduit tout en lui conférant une raideur importante en compression verticale et une raideur en flexion plus limitée.

D'autres caractéristiques et avantages de la présente invention seront mieux compris à l'aide de la description et des dessins parmi lesquels :
- La figure 1 montre une vue en perspective de l'avant d'un véhicule automobile ;
- La figure 2 est une vue schématique de l'avant d'un véhicule selon l'invention, illustrant la fixation des projecteurs à la traverse de pare-chocs ;
- La figure 3 est une vue de l'arrière de la pièce de fixation du projecteur gauche de la figure 2.

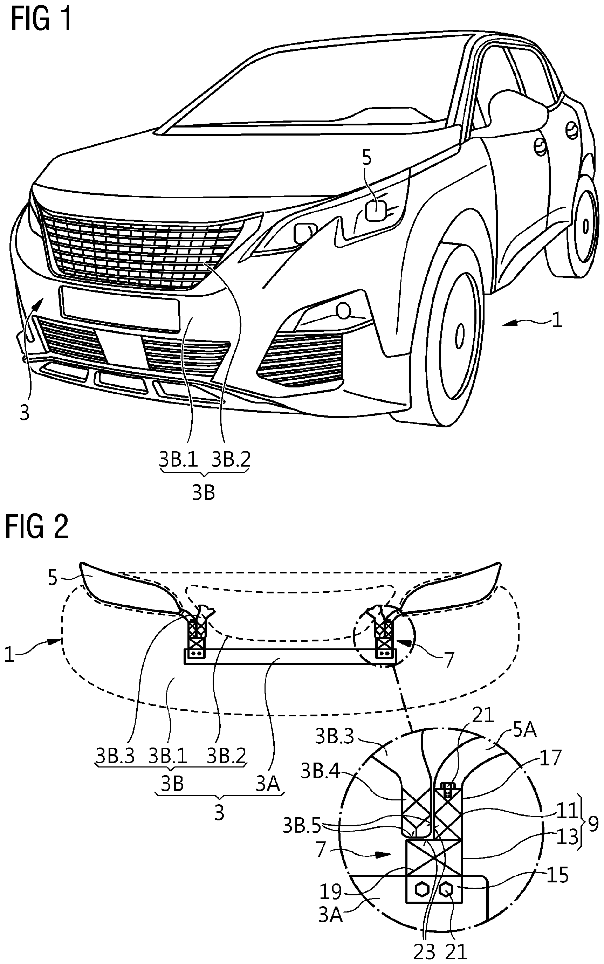

La figure 1 est une vue de l'avant d'un véhicule automobile. Le véhicule 1 comprend un pare-chocs avant 3 comportant notamment une traverse (non visible sur cette figure) et un bouclier 3B. Le bouclier 3B forme une coque 3B.1 dans laquelle est pratiquée une ouverture centrale pouvant recevoir une grille d'entrée d'air 3B.2. Des projecteurs 5 sont positionnés latéralement de part et d'autre du véhicule 1 et verticalement à distance au-dessus de la traverse. Ces projecteurs 5 ont vocation à améliorer la visibilité de la route pour le conducteur et sont généralement fixés en trois points à la structure avant du véhicule 1. C'est la fixation à un point inférieur intérieur qui est l'objet de l'invention, elle est réalisée grâce à une pièce de fixation selon l'invention positionnée entre le pare-chocs avant 3 et le projecteur 5 du véhicule 1.

La figure 2 est une représentation schématique de l'avant du véhicule de la figure 1, montrant deux pièces de fixation montées entre la traverse de pare-chocs et chacun des deux projecteurs. Le projecteur 5 comprend un boitier et une portion en saillie 5A située à une portion inférieure et latéralement intérieure du projecteur 5. La pièce de fixation 7 s'étend verticalement entre ladite portion en saillie 5A du projecteur 5 et la traverse 3A de pare-chocs 3. Ladite pièce de fixation 7 est formée par un corps creux 9 et, dans une extrémité inférieure dudit corps creux 9, par une patte verticale de fixation 15 à la traverse 3A. Le corps creux 9 comprend une portion supérieure 11 et une portion inférieure 13, il est formé par des parois extérieures 17 et des parois internes de rigidification 19. Ces parois (17, 19) servent à la fois à faciliter la fabrication de la pièce, et à améliorer sa résistance à la compression verticale grâce notamment à la forme en treillis des parois internes 19. Le corps creux 9 de la pièce de fixation 7 comprend également une face avant et une face arrière, au moins une desdites faces étant ouverte. Dans une extrémité supérieure et dans une extrémité inférieure de la pièce de fixation 7 se trouve des orifices de fixation aptes à accueillir des moyens de fixation 21. Dans l'extrémité supérieure de la pièce de fixation 7, ces orifices sont préférentiellement formés sur la paroi extérieure 17 de la pièce 7, et dans l'extrémité inférieure, ces orifices sont préférentiellement formés dans la patte verticale de fixation 15.

La portion supérieure 11 du corps creux 9 à la particularité d'être plus étroite que la potion inférieure 13, ce qui entraine une variation de largeur entre ces deux portions (11, 13). Cette variation de largeur permet à la pièce de fixation 7 de supporter un prolongement 3B.4 d'une pièce 3B.3 du bouclier 3B. La pièce 3B.3 est avantageusement rapportée. Préférentiellement, il n'y a pas de moyens de fixation entre le prolongement 3B.4 et la pièce de fixation 7. Au moins une zone d'appui 3B.5 sur le prolongement 3B.4 et au moins une zone de maintien 23 sur la pièce de fixation 7 coopèrent ensemble, la zone de maintien 23 étant préférentiellement une zone de soutien du bouclier 3B. La zone de maintien 23 est préférentiellement une zone de soutien horizontale, positionnée dans une zone intermédiaire entre les extrémités supérieure et inférieure de la pièce de fixation 7. La paroi latérale du prolongement 3B.4 peut également comprendre une seconde zone d'appui 3B.5 sur la face en vis-à-vis avec une seconde zone de maintien 23 de la paroi externe latérale de la portion supérieure 11 de la pièce de fixation 7.

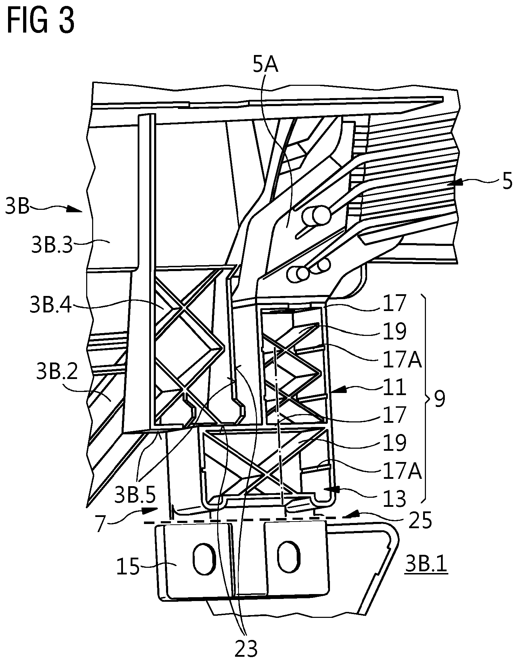

La figure 3 est une vue de l'arrière de la pièce de fixation montée au projecteur du véhicule. Sur cette figure, on peut voir notamment que les parois extérieures 17 peuvent comprendre des rainures longitudinales 17A destinées à faciliter la rupture des parois 17 en cas de choc violent. Dans l'extrémité inférieure de la pièce de fixation 7 se trouve une zone 25 configurée pour céder en cas de choc. Cette zone 25 configurée pour céder en cas de choc est plus préférentiellement située à la liaison entre la patte verticale de fixation 15 et le corps creux 9 de la pièce de fixation 7. L'ouverture dans le bouclier 3B, positionnée à l'arrière de la patte verticale de fixation 15 permet le passage d'un anneau d'élingage pour le remorquage du véhicule.

De manière générale, la pièce de fixation 7 est préférentiellement réalisée dans un matériau thermoplastique. La fabrication de la pièce de fixation 7 est préférentiellement réalisée par moulage, mais peut également être conçue par d'autres techniques connues de l'homme du métier.

Dans un autre mode de réalisation non montré sur ces figures, une pièce de fixation peut comprendre une portion supérieure servant de support à la fixation au projecteur, une portion médiane prenant appui à la fois sur une traverse de pare-chocs et sur un prolongement arrière du bouclier du pare-chocs, et une portion inférieure s'étendant à l'avant de la traverse. La portion supérieure comprend une face supérieure avec des orifices de fixation pour fixer le projecteur ainsi qu'une face oblique, positionnée à l'arrière d'une grille d'entrée d'air et qui s'adapte à la forme de ladite grille. La portion médiane de la pièce de fixation comprend une lumière centrale apte à accueillir le prolongement du bouclier du pare-chocs. La portion inférieure s'étend depuis une extrémité antérieure et inférieure de la portion médiane, et comprend des orifices de fixation pour fixer la pièce de fixation sur la traverse. La portion inférieure est préférentiellement d'une épaisseur inférieure à l'épaisseur des autres portions médiane et supérieure. Une zone configurée pour céder en cas de choc est également prévue entre les portions supérieure et médiane.

## Revendications

1. Véhicule automobile (1) comprenant :
- une traverse (3A) de pare-chocs avant (3) ;
- un bouclier (3B) de pare-chocs avant (3), disposé devant la traverse (3A) ;
- deux projecteurs (5) disposés latéralement de part et d'autre du véhicule (1) et verticalement à distance et au-dessus de la traverse (3A) ;
- au moins une pièce de fixation (7) d'un des projecteurs (5), reliant ledit projecteur (5) à la traverse (3A) ;
**caractérisé en ce que**
le bouclier (3B) comprend, sur une face interne, au moins une zone d'appui (3B.5) dudit bouclier (3B), et la ou chacune des pièces de fixation (7) comprend une zone de maintien (23) coopérant avec ladite ou au moins une desdites zones d'appui (3B.5).

2. Véhicule automobile (1) selon la revendication 1, **caractérisé en ce que** la zone de maintien (23) de la ou de chacune des pièces de fixation (7) est une zone de soutien du bouclier (3B), supportant la ou les zones d'appui (3B.5) coopérant avec ladite zone de maintien (23).

3. Véhicule automobile (1) selon la revendication 2, **caractérisé en ce que** la zone de maintien (23) de la ou de chacune des pièces de fixation (7) forme une surface de soutien horizontale recevant la ou les zones d'appui (3B.5) correspondantes du bouclier (3B).

4. Véhicule automobile (1) selon l'une des revendications 1 à 3, **caractérisé en ce que** la ou chacune des pièces de fixation (7) s'étend verticalement avec une extrémité inférieure fixée à la traverse (3A) et une extrémité supérieure fixée au projecteur (5) correspondant, la zone de maintien (23) de ladite pièce (7) étant une zone intermédiaire entre lesdites extrémités.

5. Véhicule automobile (1) selon la revendication 4, **caractérisé en ce que** la ou chacune des pièces de fixation (7) présente au niveau de l'extrémité inférieure de ladite pièce (7) une zone (25) configurée pour céder en cas de choc à l'avant du véhicule (1).

6. Véhicule automobile (1) selon l'une des revendications 1 à 5, **caractérisé en ce que** la ou de chacune des pièces de fixation (7) comprend un corps creux (9) s'étendant verticalement et, à une extrémité inférieure, une patte verticale de fixation (15) à la traverse (3A).

7. Véhicule automobile (1) selon la revendication 6, **caractérisé en ce que** pour la ou chacune des pièces de fixation (7), le corps creux (9) est une structure avec des parois extérieures (17) et des parois internes de rigidification (19), ladite structure comprenant une face avant et une face arrière, au moins une desdites faces étant ouverte.

8. Véhicule automobile (1) selon l'une des revendications 6 et 7, **caractérisé en ce que** pour la ou chacune des pièces de fixation (7), le corps creux (9) présente une portion inférieure (13) et une portion supérieure (11) plus étroite que la portion inférieure (13) formant ainsi une variation de largeur, la zone de maintien (23) sur ladite pièce (7) étant formée par la portion inférieure (13) au niveau de la variation de largeur.

9. Véhicule automobile (1) selon la revendication 5, et selon l'une des revendications 6 à 8, **caractérisé en ce que** pour la ou chacune des pièces de fixation (7), la zone configurée pour céder (25) est située à une liaison entre la patte verticale de fixation (15) et le corps creux (9) de ladite pièce (7).

10. Véhicule automobile (1) selon l'une des revendications 1 à 9, **caractérisé en ce que** le bouclier (3B) comprend une coque (3B.1) avec une ouverture centrale et une grille d'entrée d'air (3B.2) disposée dans ladite ouverture, la ou les zones d'appui (3B.5) du bouclier (3B) étant formées ou fixées sur ladite grille (3B.2).

## Patentansprüche

1. Ein Kraftfahrzeug (1) mit:
- einem Querträger (3A) eines vorderen Stoßfängers (3);
- ein Schild (3B) des vorderen Stoßfängers (3), das vor dem Querträger (3A) angeordnet ist;
- zwei Scheinwerfer (5), die seitlich auf beiden Seiten des Fahrzeugs (1) und vertikal in einem Abstand von und oberhalb des Querträgers (3A) angeordnet sind;
- mindestens ein Befestigungsteil (7) für einen der Scheinwerfer (5), das den besagten Scheinwerfer (5) mit dem Querträger (3A) verbindet;
**dadurch gekennzeichnet, dass**
die Abschirmung (3B) auf einer Innenseite mindestens einen Stützbereich (3B.5) der Abschirmung (3B) aufweist, und das oder jedes der Befestigungsteile (7) einen Haltebereich (23) aufweist, der mit dem oder mindestens einem der Stützbereiche (3B.5) zusammenwirkt.

2. Kraftfahrzeug (1) nach Anspruch 1, **dadurch gekennzeichnet, dass** der Haltebereich (23) des oder der Befestigungsteile (7) ein Stützbereich des Schildes (3B) ist, der den oder die mit dem Haltebereich (23) zusammenwirkenden Stützbereiche (3B.5) stützt.

3. Kraftfahrzeug (1) nach Anspruch 2, **dadurch gekennzeichnet, dass** der Haltebereich (23) des oder jedes Befestigungsteils (7) eine horizontale Stützfläche bildet, die den oder die entsprechenden Stützbereiche (3B.5) des Schildes (3B) aufnimmt.

4. Kraftfahrzeug (1) nach einem der Ansprüche 1 bis 3, **dadurch gekennzeichnet, dass** das oder jedes der Befestigungsteile (7) sich vertikal erstreckt, wobei ein unteres Ende am Querträger (3A) und ein oberes Ende am entsprechenden Scheinwerfer (5) befestigt ist und der Haltebereich (23) des Teils (7) ein Zwischenbereich zwischen den Enden ist.

5. Kraftfahrzeug (1) nach Anspruch 4, **dadurch gekennzeichnet, dass** das oder jedes der Befestigungsteile (7) am unteren Ende des besagten Teils (7) einen Bereich (25) aufweist, der so gestaltet ist, dass er im Falle eines Aufpralls auf die Vorderseite des Fahrzeugs (1) nachgibt.

6. Kraftfahrzeug (1) nach einem der Ansprüche 1 bis 5, **dadurch gekennzeichnet, dass** das oder jedes der Verbindungselemente (7) einen vertikal verlaufenden Hohlkörper (9) und an einem unteren Ende eine vertikale Lasche (15) zur Befestigung an der Querstange (3A) aufweist.

7. Kraftfahrzeug (1) nach Anspruch 6, **dadurch gekennzeichnet, dass** der Hohlkörper (9) für das oder jedes der Verbindungselemente (7) eine Struktur mit Außenwänden (17) und inneren Versteifungswänden (19) ist, wobei die Struktur eine Vorderseite und eine Rückseite aufweist und mindestens eine der Seiten offen ist.

8. Kraftfahrzeug (1) nach einem der Ansprüche 6 und 7, **dadurch gekennzeichnet, dass** der Hohlkörper (9) für das oder jedes der Befestigungsteile (7) einen unteren Abschnitt (13) und einen oberen Abschnitt (11) aufweist, der schmaler als der untere Abschnitt (13) ist und somit eine Breitenänderung bildet, wobei die Haltezone (23) an dem Teil (7) durch den unteren Abschnitt (13) in Höhe der Breitenänderung gebildet wird.

9. Kraftfahrzeug (1) nach Anspruch 5 und nach einem der Ansprüche 6 bis 8, **dadurch gekennzeichnet, dass** bei dem oder den Befestigungsteilen (7) der nachgiebige Bereich (25) an einer Verbindung zwischen der vertikalen Befestigungslasche (15) und dem Hohlkörper (9) des Teils (7) angeordnet ist.

10. Kraftfahrzeug (1) nach einem der Ansprüche 1 bis 9, **dadurch gekennzeichnet, dass** die Abschirmung (3B) eine Schale (3B.1) mit einer zentralen Öffnung und einem in dieser Öffnung angeordneten Lufteintrittsgitter (3B.2) umfasst, wobei die Lagerfläche(n) (3B.5) der Abschirmung (3B) an dem Gitter (3B.2) ausgebildet oder befestigt ist/sind.

## Claims

1. A motor vehicle (1) comprising:
- a cross member (3A) of a front bumper (3);
- a shield (3B) of the front bumper (3), arranged in front of the cross member (3A);
- two headlamps (5) arranged laterally on either side of the vehicle (1) and vertically at a distance from and above the cross member (3A);
- at least one attachment part (7) for one of the headlamps (5), connecting the said headlamp (5) to the crossbar (3A);
**characterised in that**
the shield (3B) comprises, on an internal face, at least one support zone (3B.5) of said shield (3B), and the or each of the fastening pieces (7) comprises a holding zone (23) cooperating with said or at least one of said support zones (3B.5).

2. Motor vehicle (1) according to claim 1, **characterised in that** the holding area (23) of the or each of the fastening parts (7) is a support area of the shield (3B), supporting the support area or areas (3B.5) cooperating with said holding area (23).

3. Motor vehicle (1) according to claim 2, **characterised in that** the holding area (23) of the or each fastening part (7) forms a horizontal support surface receiving the corresponding support area or areas (3B.5) of the shield (3B).

4. Motor vehicle (1) according to one of claims 1 to 3, **characterised in that** the or each of the fastening pieces (7) extends vertically with a lower end fixed to the crossbar (3A) and an upper end fixed to the corresponding headlamp (5), the holding area (23) of said piece (7) being an intermediate area between said ends.

5. Motor vehicle (1) according to claim 4, **characterised in that** the or each of the fixing parts (7) has, at the lower end of the said part (7), a zone (25) configured to yield in the event of an impact to the front of the vehicle (1).

6. Motor vehicle (1) according to one of claims 1 to 5, **characterised in that** the or each of the fasteners (7) comprises a hollow body (9) extending vertically and, at a lower end, a vertical lug (15) for fastening to the crossbar (3A).

7. Motor vehicle (1) according to claim 6, **characterised in that** for the or each of the fasteners (7), the hollow body (9) is a structure with external walls (17) and internal stiffening walls (19), said structure comprising a front face and a rear face, at least one of said faces being open.

8. Motor vehicle (1) according to one of claims 6 and 7, **characterised in that** for the or each of the fastening parts (7), the hollow body (9) has a lower portion (13) and an upper portion (11) which is narrower than the lower portion (13) thus forming a variation in width, the holding area (23) on the said part (7) being formed by the lower portion (13) at the level of the variation in width

9. Motor vehicle (1) according to claim 5, and according to one of claims 6 to 8, **characterized in that** for the or each of the fastening parts (7), the area configured to yield (25) is located at a connection between the vertical fastening lug (15) and the hollow body (9) of said part (7).

10. Motor vehicle (1) according to any of claims 1 to 9, **characterised in that** the shield (3B) comprises a shell (3B.1) with a central opening and an air inlet grille (3B.2) arranged in said opening, the bearing area(s) (3B.5) of the shield (3B) being formed or fixed on said grille (3B.2).
